# FASCICULE DE BREVET EUROPEEN

(11) **EP 2 336 885 B1**
(45) Date de publication et mention de la délivrance du brevet: **01.05.2019**
(21) Numéro de dépôt: 10196243.9
(22) Date de dépôt: 21.12.2010
(51) Int. Cl.: G06F 9/54, G06F 3/01

(54) **Procédé pour afficher dans un navigateur web le rendu produit par une application**
Verfahren zum Integrieren der Grafikwiedergabe einer graphischen Anwendung in einem Webbrowser
Method for integrating in a web browser the graphics rendering generated by a graphical application

(30) Priorité: 21.12.2009 FR 0959326
(43) Date de publication de la demande: 22.06.2011
(73) Titulaire: Orange, 75015 Paris (FR)
(72) Inventeur: Vongphouthone, Aline, 92130 Issy Les Moulineaux (FR); Faure, David, 75014 Paris (FR); Piegay, Romain, 75011 Paris (FR)
(74) Mandataire: Regimbeau

(56) Documents cités:
- EP-A2- 1 310 868
- WO-A1-03/067568
- US-A1- 2007 245 353
- US-A1- 2009 054 141
- US-A1- 2009 287 772

## Description

La présente invention concerne le domaine des applications accessibles sur Internet depuis des terminaux informatiques d'utilisateurs. En particulier, les applications visées sont celles mettant en oeuvre des environnements virtuels en trois dimensions (3D), comme par exemple celles relatives à des mondes virtuels ou des jeux en 3D.

Plus précisément, la présente invention concerne une technique pour intégrer dans un navigateur web le rendu produit par une application destinée à être exécutée de manière autonome par un système d'exploitation d'un terminal informatique.

Les mondes virtuels suscitent beaucoup d'intérêt depuis quelques années. Ainsi, l'un des plus populaires de ces mondes virtuels est connu sous le nom Second Life™, pour lequel une forte communauté d'utilisateurs s'est développée, et enrichit le monde des diverses créations des utilisateurs : habillage d'avatars, objets, décors. Cette communauté active organise également des événements et se rassemble en groupes.

Cependant, même si les réalisations produites et les événements organisés par les utilisateurs de mondes virtuels tels que Second Life, sont remarquables, ils restent cependant confidentiels, c'est-à-dire peu connus du grand public, et cela pour au moins deux raisons.

D'une part, pour accéder à un monde virtuel, l'utilisateur doit disposer de ressources informatiques importantes. En effet, ces mondes virtuels requièrent des applications clientes lourdes pour calculer en temps réel le rendu vu par une caméra ou un avatar d'un monde dont la description est stockée sur un serveur.

D'autre part, pour accéder à l'application graphique correspondante, disponible sur un serveur d'un réseau comme l'Internet, l'utilisateur doit suivre un processus fastidieux :
1/ aller sur le site web du monde virtuel (par exemple Second Life) ;
2/ s'inscrire et obtenir un identifiant/mot de passe ;
3/ trouver le lien de téléchargement du client et cliquer dessus ;
3/ attendre la fin du téléchargement ;
4/ installer le client ;
5/ lancer le client, saisir son identifiant / mot de passe ;
6/ se rendre à l'endroit du réseau où se trouve l'objet graphique qu'il veut voir ou bien les événements qu'il veut suivre (conférence, démonstration de produit, jeu, rencontre etc.), soit en passant pas un lien donné en dehors du monde virtuel - par exemple, dans le cas de Second Life, en utilisant une adresse dans un format particulier (SLURL) -, soit à l'aide du moteur de recherche interne à l'application du monde virtuel considéré.

Cette difficulté d'accès est la cause des problèmes exposés ci-après.

Le monde virtuel reste "opaque" pour les utilisateurs, dans le sens où, à part des copies d'écrans et des vidéos, l'utilisateur ne dispose d'aucun aperçu de l'expérience du monde virtuel avant de passer par le téléchargement et l'installation du client lourd.

Par ailleurs, des utilisateurs peuvent se lasser pendant le processus d'installation, ou bien se tromper compte tenu de la complexité du processus d'installation, ou encore se sentir perdus au cours de l'installation, notamment s'ils sont novices en informatique, et par conséquent interrompre le processus d'installation avant qu'il soit achevé ; cela conduit donc à la perte d'utilisateurs potentiels de l'application de monde virtuel considérée.

Enfin, une fois le logiciel de l'application téléchargé, l'utilisateur ne se connecte plus au site web d'accès au logiciel. Par conséquent, la puissance des outils de recherche web et des schémas ergonomiques bien connus sur internet, n'est pas utilisée, au détriment de l'utilisateur.

La plupart des mondes virtuels fonctionnent selon le même principe. On peut également étendre la problématique précitée aux jeux vidéo téléchargeables et exécutables en tant que client lourd.

On connaît cependant des technologies de modélisation 3D qui proposent l'accès à des scènes 3D accessibles sur le Web, sans nécessiter l'installation d'un logiciel client lourd dans le système informatique client.

Ces technologies utilisent des navigateurs web associés à un module logiciel externe spécifique, appelé communément "*plugin*" (parfois désigné par "plugiciel" ou "visionneuse", en français), conçu pour étendre, de manière externe, les fonctionnalités du navigateur web.

Ainsi, on peut citer le logiciel 3D *Unity*™, compatible avec les navigateurs web grâce à son *plugin* appelé *Unity Web Player*™.

On peut aussi citer le langage de description VRML (*Virtual Reality Markup Language*) qui permet de représenter des univers interactifs 3D virtuels. Les fichiers de description (.wrl) peuvent être téléchargés depuis un serveur web et visualisés à l'aide d'un navigateur web complété par un *plugin* spécifique.

On peut encore mentionner le logiciel de création d'applications 3D *Virtools*™. Les contenus Virtools peuvent être visualisés sur Internet grâce à un navigateur web spécifique.

Cependant, chacune des technologies ci-dessus permet au navigateur web correspondant de ne visualiser que des contenus 3D produits par la technologie considérée.

Le document brevet US2009/0054141A1 décrit un système qui utilise un *plugin* associé à un navigateur web pour intégrer le rendu produit par une application de jeu dans une fenêtre du navigateur. Selon le système décrit, le *plugin* dispose d'un module d'affichage graphique d'application de jeu permettant de mettre en relation un moteur graphique à trois dimensions équipant l'application graphique, avec un module d'affichage de page web inclus dans le navigateur, afin d'afficher dans la fenêtre du navigateur des vues produites par l'application graphique.

Le document brevet US2009/287772 décrit un procédé dans lequel un premier programme d'extension intercepte des appels d'une application serveur pour les relayer à un deuxième programme d'extension situé sur une machine cliente. Cette interception se borne aux seuls appels de fonctions.

Ainsi, dans la technique précitée, compte tenu de l'interaction entre le *plugin* et l'application graphique, cette dernière est nécessairement conçue dès le départ pour fonctionner avec le *plugin.* Il résulte qu'un tel *plugin* ne peut fonctionner avec d'autres applications graphiques non conçues pour interagir avec le *plugin* en question.

La présente invention vise à améliorer la situation exposée ci-dessus, relative à l'état de la technique, en proposant un procédé pour afficher dans un navigateur web d'un terminal informatique d'utilisateur le rendu produit par une application destinée à être exécutée de manière autonome par un système d'exploitation d'ordinateur (application indépendante ou "*standalone*" en anglais).

Conformément à l'invention, ce procédé comporte une étape consistant à exécuter au sein du navigateur un module logiciel déclenchant une exécution de l'application par le système d'exploitation du terminal, et mettant en oeuvre, au cours de l'exécution de l'application, des étapes consistant à :
- détecter au moins une fenêtre générée par l'application qui est relative au rendu généré par l'application ;
- pour chaque fenêtre détectée à l'étape précédente, rendre la fenêtre détectée hiérarchiquement dépendante du module logiciel, de manière à rediriger le rendu produit par l'application vers une fenêtre affichée par le navigateur.

Grâce aux dispositions précitées relatives à la détection de fenêtres générées par l'application et à la redirection du rendu à l'intérieur de la fenêtre du navigateur, l'application ne nécessite aucune adaptation ou modification de son code source pour pouvoir être exécutée via un navigateur web.

En pratique, l'invention est particulièrement intéressante dans le cadre d'applications graphiques telles que des jeux en trois dimensions (3D) ou bien des applications d'environnement virtuel 3D.

Dans un mode de réalisation, l'exécution dudit module logiciel est déclenchée à partir d'une page affichée dans le navigateur, suite par exemple à une action effectuée par un utilisateur sur un élément affiché dans cette page. L'utilisateur reste ainsi dans le contexte du navigateur pour déclencher l'exécution de ce module logiciel.

Dans une première variante de réalisation, le code d'une page affichée dans le navigateur contient une balise identifiant ladite application et interprétable par ledit module logiciel. Par simple adjonction d'une balise, on peut requérir l'exécution par le navigateur d'un module logiciel dédié, conçu pour interpréter cette balise et déclencher une fonction de traitement associée.

Dans une deuxième variante de réalisation, le module logiciel est un module d'extension associé au navigateur et chargé au cours de l'exécution du navigateur.

Ainsi, un tel module d'extension associé au navigateur web équipant un terminal utilisateur est exécuté via un navigateur web standard équipant le terminal utilisateur.

Selon un mode de réalisation, chaque fenêtre détectée est rendue hiérarchiquement dépendante du module d'extension par l'exécution d'une fonction de gestion de fenêtres du système d'exploitation, rendant la fenêtre détectée enfant du module d'extension.

Selon une caractéristique particulière de l'invention, le procédé comprend en outre des étapes consistant à :
- détecter les fenêtres générées par l'application qui sont relatives à des événements produits par l'application qui ne concernent pas ledit rendu, et
- pour chaque fenêtre détectée, masquer l'affichage de la fenêtre et déterminer en outre si une action d'un utilisateur sur un dispositif d'entrée/sortie équipant le terminal utilisateur est attendue, et si c'est le cas, simuler l'action attendue de l'utilisateur.

De telles fenêtres, dont l'affichage est masqué grâce à l'exécution du module logiciel, sont par exemple des fenêtres liées à la mise à jour de l'application ou des fenêtres d'attente ("*Splash windows"* en anglais) c'est-à-dire des fenêtres incitant l'utilisateur à patienter pendant le chargement et l'installation d'un logiciel, tout en lui apportant diverses informations comme le nom du logiciel, le nom de l'éditeur, le logo de l'éditeur ou du logiciel, etc., et l'état du chargement du logiciel. De cette façon, l'installation de l'application et/ou le lancement de l'application dans le terminal utilisateur, via le navigateur, sont complètement transparents pour l'utilisateur.

En outre, selon une autre caractéristique de l'invention, le procédé comprend aussi des étapes consistant à :
- détecter au cours de l'exécution de l'application, des actions effectuées par l'utilisateur via un dispositif d'entrée/sortie et visant à modifier le mode d'affichage du rendu produit par l'application ; et
- mettre en oeuvre la modification de mode d'affichage requise.

De telles actions de l'utilisateur concernent par exemple le passage en plein écran de la vue graphique présentée par l'application graphique et rendue dans la fenêtre du navigateur. Grâce à la caractéristique précitée, de telles modifications d'affichage demandées par l'utilisateur sont prises en charge automatiquement, comme si l'application était exécutée en mode autonome (*standalone*).

Selon une autre caractéristique de l'invention, le procédé comprend une étape consistant à capturer une vue graphique affichée dans la fenêtre du navigateur en réponse à une action de l'utilisateur sur un élément affiché dans la fenêtre du navigateur. Ainsi l'utilisateur peut stocker localement des images, ou des séquences d'images relatives à un jeu ou un monde virtuel, et les partager avec son réseau social sur le réseau (Internet).

Selon d'autres caractéristiques de l'invention le module logiciel met en oeuvre des étapes préalables consistant à, automatiquement télécharger du réseau dans le système informatique utilisateur, un programme d'installation de l'application, puis à exécuter le programme d'installation pour installer l'application dans le système informatique utilisateur.

Dans un mode de réalisation où le module logiciel est un module d'extension, le module d'extension est obtenu au préalable par téléchargement depuis un réseau auquel est connecté le terminal, via une page web affichée par le navigateur ; en particulier, le module d'extension peut être chargé dans le navigateur du système informatique utilisateur depuis le réseau, après détermination que le navigateur ne dispose pas déjà du module d'extension.

Ainsi, grâce aux caractéristiques précitées, la présente invention peut être avantageusement mise en application dans un système de fourniture d'applications graphiques, telles que des jeux, par l'intermédiaire de serveurs dédiés sur un réseau du type de l'Internet, auquel le terminal de l'utilisateur est connecté, et ce dernier peut alors sélectionner sur une page web affichée par un navigateur web, un jeu à exécuter en local directement dans la fenêtre du navigateur et de manière totalement automatisée et transparente pour lui.

En pratique, le module d'extension associé au navigateur du terminal utilisateur est un module logiciel de type *plugin.* Grâce à un tel module d'extension, une application graphique téléchargeable depuis un serveur sur Internet et conçue pour fonctionner de manière autonome sur un ordinateur utilisateur, par exemple un PC, peut être directement exécutée à partir d'une page web affichée par le navigateur de l'ordinateur utilisateur.

Par conséquent, selon un deuxième aspect, l'invention concerne un module logiciel pour navigateur web, remarquable en ce qu'il comprend des instructions de programme adaptées à la mise en oeuvre d'un procédé selon l'invention tel qu'exposé brièvement supra, lorsque ce module logiciel est exécuté par un navigateur web équipant un système informatique.

De même, l'invention vise, selon un troisième aspect, un terminal informatique d'utilisateur comprenant un navigateur web équipé d'un module logiciel selon l'invention.

Plus précisément, l'invention concerne un terminal informatique d'utilisateur équipé d'un navigateur web au sein duquel est exécuté un module logiciel adapté pour:
- déclencher une exécution, par le système d'exploitation du terminal, d'une application destinée à être exécutée de manière autonome par un système d'exploitation d'ordinateur, et pour mettre en oeuvre, au cours de l'exécution de l'application, des étapes consistant à:
- détecter au moins une fenêtre générée par l'application et qui est relative au rendu généré par l'application ;
- pour chaque fenêtre détectée à l'étape précédente, rendre la fenêtre détectée hiérarchiquement dépendante du module logiciel, de manière à rediriger le rendu produit par l'application vers une fenêtre affichée par le navigateur.

Les avantages procurés par le module d'extension ou le terminal informatique précités, sont identiques à ceux mentionnés plus haut en relation avec le procédé, selon l'invention, pour afficher dans un navigateur web le rendu produit par une application.

L'invention sera mieux comprise à l'aide de la description détaillée qui va suivre, faite en se référant aux dessins annexés dans lesquels :
- la figure 1 représente un système de fourniture d'applications graphiques de jeux sur un réseau de type Internet, dans lequel la présente invention peut être mise en oeuvre ; et
- la figure 2 est un organigramme illustrant les principales étapes d'un procédé, selon l'invention, pour intégrer dans un navigateur web le rendu produit par une application graphique.

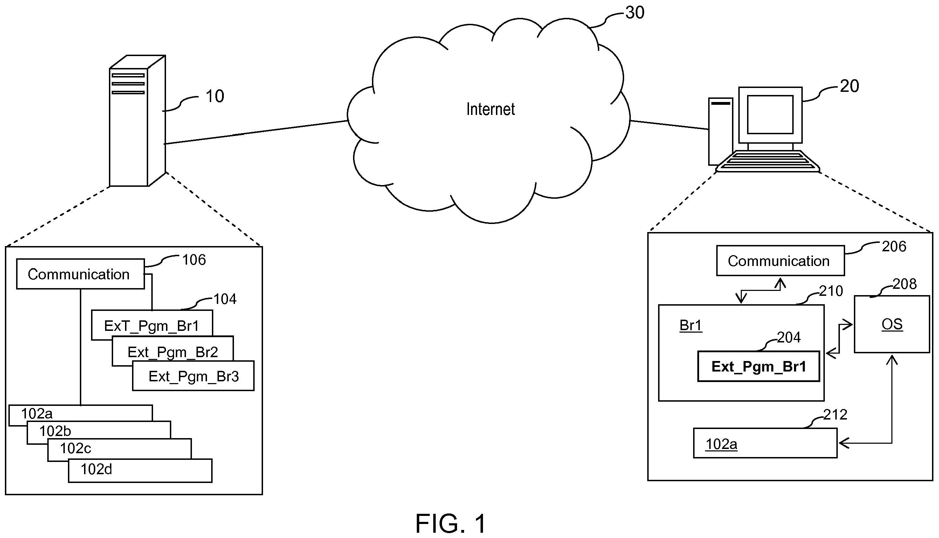

Dans l'exemple de mode de réalisation de l'invention, décrit ci-après, l'invention est mise en oeuvre dans un environnement client-serveur comme illustré par la **figure 1** et le module logiciel est mis en oeuvre sous forme de module d'extension, de type plug-in.

La figure 1 représente plus particulièrement un système de fourniture d'applications, notamment des applications graphiques de jeux sur un réseau 30 de type Internet. Le système de fourniture de jeux se compose, d'une part, d'un ou plusieurs serveurs 10 connectés au réseau et proposant des applications graphiques à télécharger, par exemple des jeux, et d'autre part de terminaux d'utilisateurs 20 qui peuvent se connecter au réseau 30.

Comme représenté à la figure 1, les terminaux d'utilisateurs 20, encore désigné par terminaux clients, peuvent être des ordinateurs personnels de type PC, mais également des assistants numériques personnels (PDA) ou des terminaux de téléphonie mobile, pouvant se connecter à l'Internet. Le réseau Internet 30 peut être accessible directement ou bien au travers de réseaux de téléphonie fixe ou mobile, par exemple un réseau de téléphonie fixe utilisant la technologie ADSL ou bien un réseau de téléphonie mobile de troisième génération (UMTS).

Le serveur 10 offre au téléchargement des applications graphiques 102a-d, telles que des jeux en trois dimensions (3D) ou bien des applications de mondes virtuels 3D. A cette fin, le serveur 10 dispose d'un module de communication 106 de type connu en soi permettant la communication de données sur le réseau ainsi que la publication d'un site web de téléchargement d'applications graphiques.

Selon un mode de réalisation de l'invention, le serveur 1 fournit pour téléchargement, un ensemble 104 de modules logiciels, sous forme chacun d'un module d'extension Ext_Pgm_Br1,2,3 selon l'invention, conçu chacun pour étendre les fonctionnalités d'un navigateur web d'un type spécifique noté Br1,2,3. Un tel module d'extension est nommé également "programme d'extension" dans ce document.

Ainsi, par exemple, pour le navigateur web connu sous le nom *Firefox*™ de la société Mozilla, le module d'extension correspondant peut être sous la forme d'un *plugin* Firefox. Pour le navigateur web connu sous le nom de *Internet Explorer*™ de la société Microsoft, le module d'extension pourra être sous la forme d'un module *ActiveX*™. Bien entendu, des modules d'extension spécifiques pour d'autres navigateurs peuvent être réalisés conformément à l'invention, en particulier pour les navigateurs connus sous les noms suivants : Opéra™, Safari™, Konkero™.

Toujours à la figure 1, un terminal d'utilisateur ou client 20, ici un ordinateur personnel (PC), est relié au réseau Internet 30 par l'intermédiaire d'un module de communication 206 de type connu en soi, et dispose d'un navigateur web 210 de type Br1, relié au module de communication 206 pour pouvoir consulter des sites web sur le réseau et en charger les pages web correspondantes. Le fonctionnement du terminal utilisateur 20 est géré par un système d'exploitation OS 208. A titre d'exemple, dans l'exemple présenté, le système d'exploitation est Windows™. Le système d'exploitation 208 contrôle l'exécution du navigateur web 210 ainsi que celle d'un programme de jeu 212 installé sur le disque dur (non représenté) du terminal utilisateur. Le programme de jeu 212 est une application graphique 102a de type autonome (*standalone*) obtenue au préalable par téléchargement à partir du serveur 10 de jeux.

De plus, conformément à l'invention, le navigateur 210 du terminal 20 est équipé du module d'extension 204 "Ext_Pgm_Br1" conçu pour le type, Br1, de son navigateur. Le module d'extension 204 a par exemple été obtenu par téléchargement à partir du serveur 10.

L'exécution du module d'extension 204 par le navigateur 210 du terminal 20 a pour effet, conformément à l'invention, de rediriger le rendu produit par une application vers une fenêtre du navigateur 210. Par rendu, on nomme ici les données d'interface utilisateur générées par l'application, qui sont destinées à être affichées dans une fenêtre d'une interface utilisateur de l'application.

Usuellement, une telle interface utilisateur étant une interface utilisateur graphique, on parlera ici de "rendu graphique" généré par l'application et l'application sera nommée "application graphique". Cependant l'invention est applicable à tout type d'interface utilisateur, c'est-à-dire également au cas où cette interface utilisateur serait constituée d'une simple interface textuelle.

Dans le cas d'une application sous forme de jeu vidéo, le rendu produit par cette application comprend les données d'un flux audio / vidéo produit par cette application. Le rendu produit par une application peut comprendre aussi bien des éléments graphiques servant d'éléments d'interaction, que des images, dessins, un contenu sonore, du texte, etc.

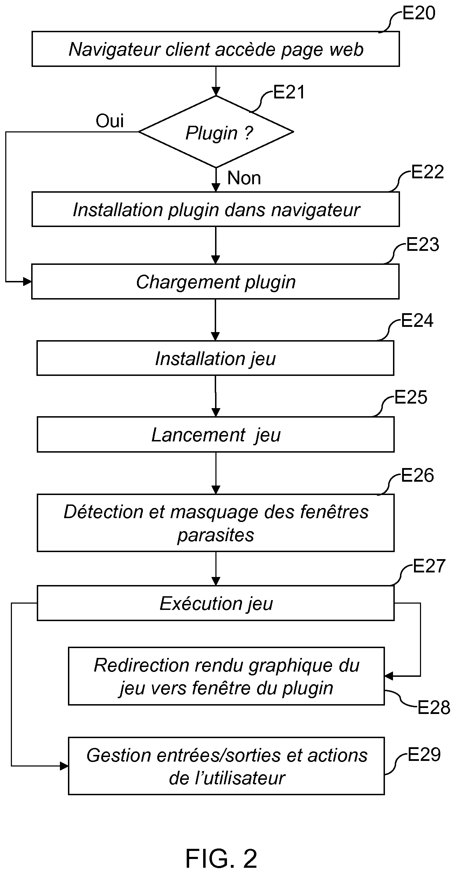

La mise en oeuvre d'un procédé, selon l'invention, pour intégrer dans un navigateur web d'un terminal informatique d'utilisateur le rendu graphique produit par une application graphique, dans un système réseau tel que celui exposé ci-dessus, va maintenant être détaillé en liaison avec l'organigramme représenté à la **figure 2****,** qui représente les étapes essentielles d'un procédé selon l'invention.

Comme représenté à la figure 2, lors d'une première étape E20, l'utilisateur se connecte via le navigateur web 210 équipant son terminal 20 sur le site web du serveur d'applications graphiques 10, en d'autres termes, le navigateur charge et affiche une page web ou html du site web en question.

Ensuite, l'utilisateur sélectionne (étape non représentée), en cliquant sur la page web l'identifiant d'un jeu auquel il désire jouer, par exemple le jeu 102a.

En réponse à la sélection, le code de la page html affichée, exécuté par le navigateur provoque le test (étape E21) d'une librairie associée au navigateur pour déterminer si le navigateur est équipé du module d'extension nécessaire pour exécuter le jeu sélectionné au travers du navigateur. Dans ce but, la page web chargée depuis le site web du serveur, contient les balises nécessaires pour appeler le module d'extension requis.

Ainsi, si le navigateur est *Internet Explorer,* le module d'extension peut être un module ActiveX appelé dans la page html grâce à la balise OBJECT. Un module ActiveX est un fichier de type OCX (*OLE* (*Object Linking and Embedding*) *Control Extension*), pouvant être installé par le navigateur via un fichier d'archive.

Si le navigateur est *Firefox,* le module d'extension peut être un module *plugin* s'intégrant dans la page html au moyen d'une balise EMBED. Un *plugin* est un fichier DLL pouvant être installé par Firefox via une archive XPI qui contient un fichier INSTALL.RDF. Ce fichier RDF décrit des informations telles que la version et l'url de mise à jour du *plugin.* On donne ci-après un exemple de code HTML d'appel de *plugin* Firefox.

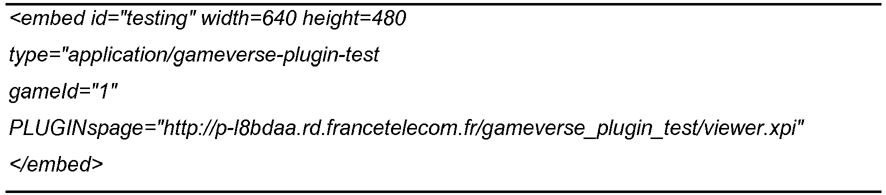

L'installation et l'utilisation de modules *plugin* ou ActiveX par des navigateurs web sont des opérations connues en soi et ne seront par conséquent guère plus détaillées.

De retour à la figure 2, lors du test E21, si le module d'extension (*plugin*) n'est pas déjà installé ou bien s'il doit être mis à jour (E21, non), il est automatiquement installé ou mis à jour (E22) dans le navigateur du terminal utilisateur, depuis le réseau ; puis le module d'extension est chargé par le navigateur, à l'étape E23 qui suit. Sinon (E21, oui), le *plugin* est directement chargé (E23) par le navigateur.

Ensuite, les étapes qui suivent sont mises en oeuvre par l'exécution des instructions contenues dans le module d'extension.

Ainsi, à l'étape suivante (E24), avant d'installer l'application graphique, le module d'extension commence par vérifier si l'application est déjà installée dans le système informatique utilisateur. Dans ce but, les fonctions suivantes de l'interface de programmation (API - *Application Programming Interface*) du système d'exploitation Windows, appelées couramment "méthodes", sont appelées :
- *RegCreateKey*
- *RegQueryValueEx*
- *RegCloseKey*

Si l'application graphique n'est pas déjà installée, il est alors procédé automatiquement à son installation. A cette fin, le module d'extension télécharge la liste des serveurs sur le réseau depuis lesquels on peut télécharger l'application graphique - ces serveurs sont classiquement désignés par serveurs "miroirs" -, puis choisit un serveur et télécharge un programme d'installation de l'application graphique.

Dans ce but, les méthodes suivantes de l'API Windows sont utilisées :
- *InternetOpenUrl*
- *InternetReadFile*

Ensuite la méthode *CreateProcess* de l'API Windows est utilisée pour lancer le programme d'installation dans le terminal utilisateur. L'installation du jeu est alors automatiquement effectuée, sans intervention de l'utilisateur, de la manière suivante.

Le module d'extension commence par identifier la fenêtre Windows correspondant au programme d'installation, en utilisant la méthode *FindWindow* de l'API Windows. La fenêtre identifiée est alors masquée, c'est-à-dire rendue invisible, en utilisant la méthode *SetParent HWND_MESSAGE* de l'API. Ensuite, le module d'extension masque le dialogue programme d'installation - utilisateur, et répond à la place de l'utilisateur, en identifiant d'abord les boutons à cliquer qui sont affichés par le programme d'installation, en naviguant dans l'arborescence des sous-fenêtres générées par le programme d'installation, puis en simulant le ou les clics de souris attendus par le programme d'installation. Dans ce but, les méthodes suivantes de l'API Windows sont utilisées :
- *GetWindow GW_CHILD GW_HWNDNEXT*
- *SendMessage WM_LBUTTONDOWN*
- *SendMessage WM_LBUTTONUP*

Une fois l'application graphique installée (un jeu, dans l'exemple décrit), elle est automatiquement lancée (étape E25) par le système d'exploitation (Windows). Dans ce but, le module d'extension utilise la méthode *CreateProcess* de l'API Windows.

A l'étape qui suit, E26, le module d'extension détecte et masque l'apparition de fenêtres parasites apparaissant au cours du chargement de l'application graphique.

En effet, lors du lancement de l'application graphique, le programme de l'application graphique peut prévoir, de manière classique, d'afficher des fenêtres relatives à la mise à jour de l'application graphique. Un programme en cours de chargement, tel qu'un jeu, affiche également, de manière classique, des fenêtres, désignées en anglais par *splash windows,* qui sont liées à la progression du chargement du jeu, ou bien affichent des informations concernant le jeu, telles que la version ou le nom des auteurs. Les fenêtres précitées, qui ne concernent pas le rendu de données graphiques généré par l'application graphique, sont considérées comme des fenêtres parasites dans le cadre de la présente invention, et à ce titre, conformément à l'invention, elles sont détectées puis masquées.

Pour la détection de fenêtres, la méthode de l'API Windows précédemment mentionnée, *FindWindow,* est utilisée.

Lorsque la fenêtre détectée est une fenêtre d'attente (*splash window*), celle-ci est masquée en utilisant la méthode *SetParent HWND_MESSAGE* de l'API Windows. Lorsqu'il s'agit d'une fenêtre de mise à jour du jeu, la fenêtre est masquée en utilisant encore la méthode *SetParent HWND_MESSAGE* de l'API Windows.

Ensuite, le module d'extension détecte et masque, le cas échéant, l'apparition d'une fenêtre demandant à l'utilisateur de déclencher l'exécution de l'application graphique, il s'agit généralement d'un bouton "jouer" pour un jeu. Le module d'extension détecte alors que le bouton "jouer" est actif en utilisant la méthode de l'API Windows *IsWindowEnabled,* puis simule le clic de souris sur le bouton "jouer" en utilisant les deux méthodes suivantes :
- *SendMessage WM_LBUTTONDOWN*
- *SendMessage WM_LBUTTONUP*

A l'étape E27 qui suit, l'application graphique (jeu) est maintenant en phase d'exécution.

Conformément à l'invention, au cours de l'exécution de l'application graphique, comme illustré par l'étape E28, le module d'extension détecte au moins une ou toutes les fenêtres générées par l'application graphique qui sont relatives au rendu graphique généré par l'application. Puis, pour chaque fenêtre détectée, le module d'extension utilise une fonction de gestion de fenêtres du système d'exploitation pour rendre la fenêtre détectée enfant du module logiciel d'extension, de manière à rediriger le rendu graphique produit par l'application graphique vers une fenêtre du navigateur.

En pratique, chaque fenêtre générée par l'application graphique est détectée en utilisant la méthode *FindWindow* de l'API du système d'exploitation Windows. Ensuite la fenêtre détectée est rendue hiérarchiquement dépendante du module d'extension. Selon le mode de réalisation décrit, le module d'extension appelle la méthode *"SetParent"* de l'API Windows pour rendre la fenêtre détectée *enfant* du module d'extension.

Ensuite, la taille de la fenêtre détectée du jeu est adaptée à la fenêtre générée par le module d'extension (*plugin*) à l'intérieur de la fenêtre du navigateur. A cette fin, la méthode *MoveWindow* de l'API Windows est utilisée.

Au cours de l'exécution de l'application graphique, comme représenté par l'étape E29 sur la figure 2, les actions effectuées par l'utilisateur via un dispositif d'entrée/sortie tel qu'un clavier ou une souris, sont détectées par le module d'extension. Lorsque les actions détectées ont une influence sur l'affichage de données graphiques produites par l'application graphique, leur traitement est alors adapté à l'affichage dans la fenêtre générée par le module d'extension. En particulier, lorsqu'une action vise à modifier l'affichage des données graphiques, le module d'extension est adapté à mettre en oeuvre la modification d'affichage requise.

Ainsi, lorsqu'il s'agit d'actions utilisant le clavier, les événements correspondant sont capturés par l'utilisation de la méthode *GetKeyState* de l'API Windows. De plus, dans le cas où l'action détectée de l'utilisateur vise au passage en plein écran de l'affichage, le module d'extension utilise alors la méthode *SetParent* de l'API Windows pour rendre la fenêtre générée par l'application graphique enfant du *bureau,* c'est-à-dire de l'espace de travail visible lorsqu'aucune fenêtre n'a été ouverte ou qu'elles ont toutes été réduites. Ensuite, la barre du titre de la fenêtre est masquée, et la taille de la fenêtre est maximisée à la taille de l'écran d'affichage.

Dans le cas notamment où l'application graphique est un jeu 3D ou une application de monde virtuel, l'utilisateur peut souhaiter sauvegarder des vues générées par l'application, pour les stocker localement et les partager avec un réseau social sur le réseau (Internet). Dans ce but, un module d'extension selon l'invention est adapté à capturer une vue ou une séquence de vues graphiques affichées dans la fenêtre du navigateur, en réponse à une action de l'utilisateur sur un élément affiché dans la fenêtre du navigateur (clic de souris par exemple).

Par ailleurs, un module d'extension selon l'invention peut contenir des instructions d'appel de fonctions de traçabilité relatives à l'utilisation, par des utilisateurs, de l'application graphique dont le rendu est géré par le module d'extension en question.

Ainsi, dans le cas du site web d'un serveur proposant des jeux à dimension communautaire, on peut envisager, sous réserve de l'accord des utilisateurs, que des informations du type "14:03, John joue au jeu X" puissent être recueillies et transférées au serveur, par exemple pour être transmises à d'autres membres de la communautés de joueurs, et/ou pour être utilisées à des fins de calcul de métriques statistiques visant à évaluer les conditions d'usage du jeu par les utilisateurs.

De manière générale, un module d'extension selon l'invention peut être facilement enrichi de nouvelles fonctions adaptées à l'exécution d'une application graphique particulière. Ainsi, on peut prévoir un module d'extension générique capable de rediriger le rendu de n'importe quelle application graphique vers une fenêtre de navigateur, et ajouter des fonctions particulières destinées à améliorer le traitement effectué par le module d'extension en fonction de besoins spécifiques concernant une application graphique donnée, par exemple un jeu.

A titre d'exemple, dans le cas notamment où la fenêtre générée par le module d'extension, à l'intérieur de la fenêtre du navigateur, n'occupe qu'une portion de la fenêtre du navigateur, on peut rendre active la fenêtre du jeu de manière programmée lorsque le curseur associé à la souris passe sur la fenêtre.

Dans ce but, on peut utiliser la méthode *GetForegroundWindow* de l'API Windows, pour détecter la fenêtre active. Puis, si la fenêtre du jeu à l'intérieur de la fenêtre du navigateur n'est pas la fenêtre active, on peut l'activer en détectant que le curseur de la souris passe sur la fenêtre du jeu. A cette fin, on peut utiliser la fonction de l'API Windows *WindowFromPoint.* Cette fonction nécessite la récupération préalable de la position du curseur dans le référentiel du jeu, dans ce but, on peut utiliser la fonction *GetDeviceState* de l'API *DirectInput* qui est une API de la suite DirectX™ de Microsoft.

La description détaillée qui précède concerne un exemple non limitatif de mode de réalisation de l'invention, dans lequel le réseau est l'Internet, le module d'extension est un module de type *plugin* (par exemple ActiveX), et le système d'exploitation du terminal utilisateur est Windows.

Cependant, la présente invention n'est nullement limitée à un système d'exploitation particulier équipant un terminal d'utilisateur considéré, ni à un type particulier de module d'extension, ainsi qu'à un type de réseau client-serveur particulier.

Par ailleurs, la présente invention n'est pas limitée à des applications graphiques telles que des jeux, mais peut également s'appliquer à tout type d'applications logicielles conçues pour fonctionner de manière autonome et dont l'exécution produit l'affichage de données de rendu dans une fenêtre d'interface utilisateur. En particulier, l'invention peut être utilisée avec des applications de bureautique, telle que la suite bureautique Office™ de Microsoft. Elle permettrait notamment d'ajouter des fonctionnalités connexes à ces applications comme des outils de travail collaboratif (chat, VOIP...), partage de captures d'écran ou de vidéos, aide en ligne....

Egalement, et afin de simplifier l'expérience utilisateur, des applications de traitement photographique telles que Photoshop™ de la société Adobe ou audio telles Audacity® pourrait être embarquées directement dans le navigateur lorsque l'utilisateur souhaite éditer un fichier depuis un site web.

Enfin, toujours tous les programmes nécessitant une installation ou une décompression sur le terminal de l'utilisateur pourraient afficher l'état de progression de l'installation / de la décompression directement dans l'environnement web, de sorte que l'utilisateur n'aurait alors plus besoin de quitter cet environnement pour procéder à cette installation / décompression.

L'invention a été décrite en détail ci-dessus dans le cas d'exemple d'une première variante de réalisation où le module logiciel est réalisé sous forme de module d'extension de type plug-in.

Selon une deuxième variante de réalisation, on s'affranchit du développement d'un module d'extension de la manière suivante:
- d'une part, en intégrant dans le code HTML de la page Web à partir de laquelle l'exécution de l'application doit être déclenchée, une balise HTML particulière identifiant l'application,
- d'autre part, en intégrant directement dans le navigateur un module logiciel adapté pour interpréter une telle balise HTML et pour déclencher l'exécution par le système d'exploitation de l'application identifiée par cette balise.

Une telle balise HTML est par exemple une balise du type "<application id="{application_id}" arg=[...] .../>, où "{application_id}" est une identification de l'application et "arg=[...] .../" représente les paramètres éventuels de cette balise.

Un tel module logiciel est conçu pour, en cas de présence d'une telle balise dans une page Web chargée dans le navigateur, mettre en oeuvre la ou les fonctions associées à cette balise, c'est-à-dire les fonctions décrites ci-dessus pour le module d'extension, et notamment exécuter les étapes consistant à:
- détecter au moins une fenêtre, générée par l'application identifiée dans la balise, fenêtre qui est relative au rendu généré par l'application;
- pour chaque fenêtre détectée, rendre la fenêtre détectée hiérarchiquement dépendante du module logiciel, de manière à rediriger le rendu produit par l'application vers une fenêtre affichée par le navigateur.

En conséquence, l'invention est mise en oeuvre en exécutant un code logiciel, non plus contenu dans un spécifique à télécharger et exécuter par le navigateur, mais intégré directement dans le code logiciel du navigateur. Cette solution présente l'intérêt d'enrichir les possibilités du navigateur et surtout de faciliter la conception de page Web puisque l'intégration d'une balise du type précité dans une page va permettre de déclencher l'exécution du module logiciel décrit.

Deux modes de réalisation sont possibles en ce qui concerne le déclenchement du module logiciel. Dans un premier mode, l'exécution du module logiciel est déclenchée automatiquement par le navigateur dès lors qu'une page Web chargée par ce navigateur contient une telle balise. Dans un deuxième mode, l'exécution du module logiciel est déclenchée suite à une action prédéfinie effectuée par un utilisateur sur une telle page Web.

## Revendications

1. Procédé pour afficher dans un navigateur web d'un terminal informatique d'utilisateur le rendu produit par une application destinée à être exécutée de manière autonome par un système d'exploitation d'ordinateur, **caractérisé en ce qu'**il comporte une étape consistant à exécuter (E22, E23) au sein du navigateur un module logiciel déclenchant une exécution (E24, E25) de l'application par le système d'exploitation du terminal, et mettant en oeuvre, au cours de l'exécution de l'application, des étapes consistant à :
- détecter (E28) au moins une fenêtre générée par l'application et qui est relative au rendu généré par l'application ;
- pour chaque fenêtre détectée à l'étape précédente, rendre la fenêtre détectée hiérarchiquement dépendante du module logiciel, de manière à rediriger (E28) le rendu produit par l'application vers une fenêtre affichée dans le navigateur.

2. Procédé selon la revendication 1, dans lequel ledit module logiciel est un module d'extension du navigateur.

3. Procédé selon la revendication 1, dans lequel l'exécution dudit module logiciel est déclenchée à partir d'une page affichée dans le navigateur.

4. Procédé selon la revendication 3, dans lequel le code de la page affichée dans le navigateur contient une balise identifiant ladite application et interprétable par ledit module logiciel.

5. Procédé selon la revendication 1, dans lequel chaque fenêtre détectée est rendue hiérarchiquement dépendante du module logiciel par exécution d'une fonction de gestion de fenêtres du système d'exploitation, rendant la fenêtre détectée enfant du module d'extension.

6. Procédé selon la revendication 1, comprenant en outre des étapes consistant à :
- détecter (E26) au moins une fenêtre générée par l'application qui est relative à des événements produits par l'application qui ne concernent pas ledit rendu, et
- pour chaque fenêtre détectée, masquer (E26) l'affichage de la fenêtre et déterminer en outre si une action d'un utilisateur sur un dispositif d'entrée/sortie équipant le terminal utilisateur est attendue, et si c'est le cas, simuler l'action attendue de l'utilisateur.

7. Procédé selon la revendication 1, comprenant en outre des étapes consistant à :
- détecter (E29) au cours de l'exécution de l'application, des actions effectuées par l'utilisateur via un dispositif d'entrée/sortie qui visent à modifier le mode d'affichage du rendu produit par l'application ; et
- mettre en oeuvre (E29) la modification de mode d'affichage requise.

8. Procédé selon la revendication 1, comprenant en outre une étape consistant à capturer une vue graphique affichée dans la fenêtre du navigateur en réponse à une action de l'utilisateur sur un élément affiché dans la fenêtre du navigateur.

9. Procédé selon l'une quelconque des revendications précédentes, dans lequel le module logiciel met en oeuvre des étapes préalables consistant à:
- télécharger du réseau dans le système informatique utilisateur, un programme d'installation de l'application ;
- exécuter le programme d'installation pour installer l'application dans le système informatique utilisateur.

10. Procédé selon la revendication 2, dans lequel le module d'extension est obtenu au préalable par téléchargement via un réseau auquel est connecté le terminal, via une page web affichée par le navigateur.

11. Procédé selon la revendication 2, dans lequel le module d'extension est un programme de type *plugin.*

12. Module logiciel pour navigateur web, **caractérisé en ce qu'**il comprend des instructions de programme adaptées à la mise en oeuvre d'un procédé selon l'une quelconque des revendications 1 à 11, lorsque ledit module logiciel est exécuté par un navigateur web équipant un système informatique.

13. Terminal informatique d'utilisateur équipé d'un navigateur web au sein duquel est exécuté un module logiciel adapté pour
- déclencher une exécution (E24, E25), par le système d'exploitation du terminal, d'une application destinée à être exécutée de manière autonome par un système d'exploitation d'ordinateur, et pour mettre en oeuvre, au cours de l'exécution de l'application, des étapes consistant à:
- détecter (E28) au moins une fenêtre générée par l'application et qui est relative au rendu généré par l'application ;
- pour chaque fenêtre détectée à l'étape précédente, rendre la fenêtre détectée hiérarchiquement dépendante du module logiciel, de manière à rediriger (E28) le rendu produit par l'application vers une fenêtre affichée par le navigateur.

## Patentansprüche

1. Verfahren zum Anzeigen der von einer Anwendung, die von einem Computer-Betriebssystem autonom ausgeführt werden soll, erzeugten Ausgabe in einem Webbrowser eines Informatik-Benutzerendgeräts, **dadurch gekennzeichnet, dass** es einen Schritt umfasst, der das Ausführen (E22, E23) eines Softwaremoduls innerhalb des Browsers umfasst, das ein Ausführen (E24, E25) der Anwendung durch das Betriebssystem des Endgeräts auslöst und während der Ausführung der Anwendung Schritte umsetzt zum:
- Erkennen (E28) von mindestens einem Fenster, das von der Anwendung erzeugt wird und das in Bezug zu der von der Anwendung erzeugten Ausgabe steht;
- Bringen, für jedes im vorherigen Schritt erkannte Fenster, des erkannten Fensters in eine hierarchische Abhängigkeit von dem Softwaremodul und zwar in der Art, dass die von der Anwendung erzeugte Ausgabe zu einem im Browser angezeigten Fenster weitergeleitet (E28) wird.

2. Verfahren nach Anspruch 1, wobei das Softwaremodul ein Erweiterungsmodul (*Plug-in*) des Browsers ist.

3. Verfahren nach Anspruch 1, wobei die Ausführung des Softwaremoduls von einer im Browser angezeigten Seite ausgelöst wird.

4. Verfahren nach Anspruch 3, wobei der Code der in dem Browser angezeigten Seite eine Kennzeichnung enthält, die die Anwendung identifiziert und von dem Softwaremodul interpretiert werden kann.

5. Verfahren nach Anspruch 1, wobei jedes erkannte Fenster in eine hierarchische Abhängigkeit von dem Softwaremodul gebracht wird, indem eine Betriebssystemfenster-Verwaltungsfunktion ausgeführt wird, die das erkannte Fenster des Erweiterungsmoduls (*Plug-in*) zu einem untergeordneten Element des Erweiterungsmoduls (*Plug-in*) macht.

6. Verfahren nach Anspruch 1, das darüber hinaus die Schritte umfasst zum:
- Erkennen (E26) von mindestens einem Fenster, das von der Anwendung erzeugt wird und das in Bezug zu Ereignissen steht, die von der Anwendung erzeugt werden und die Ausgabe nicht betreffen, und
- Maskieren (E26) der Anzeige des Fensters für jedes erkannte Fenster und darüber hinaus zum Bestimmen, ob eine Aktion eines Benutzers an einem Eingabe-/Ausgabegerät, mit dem das Benutzerendgerät ausgestattet ist, erwartet wird, und wenn dies der Fall ist, zum Simulieren der erwarteten Aktion des Benutzers.

7. Verfahren nach Anspruch 1, das darüber hinaus die Schritte umfasst zum:
- Erkennen (E29) von Aktionen während der Ausführung der Anwendung, die von dem Benutzer über ein Eingabe-/Ausgabegerät ausgeführt werden und dazu dienen sollen, den Anzeigemodus der von der Anwendung erzeugten Ausgabe zu ändern; und
- Umsetzen (E29) der angeforderten Änderung des Anzeigemodus.

8. Verfahren nach Anspruch 1, das darüber hinaus einen Schritt umfasst, der das Erfassen einer grafischen Ansicht umfasst, die im Fenster des Browsers angezeigt wird, als Antwort auf eine Aktion des Benutzers auf ein im Fenster des Browsers angezeigtes Element.

9. Verfahren nach einem der vorhergehenden Ansprüche, bei dem das Softwaremodul die vorbereitenden Schritte umsetzt, umfassend:
- Herunterladen eines Anwendungs-Installationsprogramms aus dem Netzwerk in das Benutzer-Computersystem;
- Ausführen des Installationsprogramms, um die Anwendung in dem Benutzer-Computersystem zu installieren.

10. Verfahren nach Anspruch 2, in dem das Erweiterungsmodul vorher durch Herunterladen über ein Netzwerk erhalten wird, mit dem das Endgerät über eine im Browser angezeigte Webseite verbunden ist.

11. Verfahren nach Anspruch 2, wobei das Erweiterungsmodul ein Programm des Typs Plug-in ist.

12. Softwaremodul für Webbrowser, **dadurch gekennzeichnet ist, dass** es Programmanweisungen umfasst, die an die Umsetzung eines Verfahrens gemäß einem der Ansprüche 1 bis 11 angepasst sind, sobald das Softwaremodul von einem Webbrowser auf einem Computersystem ausgeführt wird.

13. Informatik-Benutzerendgerät, ausgestattet mit einem Webbrowser, in dem ein Softwaremodul ausgeführt wird zum
- Auslösen einer Ausführung (E24, E25) einer Anwendung durch das Betriebssystem des Endgeräts, die von einem Computer-Betriebssystem autonom ausgeführt werden soll und während der Ausführung der Anwendung Schritte umsetzen soll, die Folgendes umfassen:
- Erkennen (E28) von mindestens einem Fenster, das von der Anwendung erzeugt wird und das in Bezug zu der von der Anwendung erzeugten Ausgabe steht;
- Bringen, für jedes im vorherigen Schritt erkannte Fenster, des erkannten Fensters in eine hierarchische Abhängigkeit von dem Softwaremodul und zwar in der Art, dass die von der Anwendung erzeugte Ausgabe zu einem vom Browser angezeigten Fenster weitergeleitet (E28) wird.

## Claims

1. Method for displaying, in a web browser of a user computer terminal, the rendering produced by an application designed to be executed autonomously by a computer operating system, **characterized in that** it comprises a step consisting in executing (E22, E23), within the browser, a software module triggering an execution (E24, E25) of the application by the operating system of the terminal, and implementing, during the execution of the application, steps consisting in:
- detecting (E28) at least one window generated by the application and which relates to the rendering generated by the application;
- for each window detected in the preceding step, rendering the detected window so that it is hierarchically dependent on the software module, so as to redirect (E28) the rendering produced by the application to a window displayed in the browser.

2. Method according to Claim 1, wherein said software module is an extension module of the browser.

3. Method according to Claim 1, wherein the execution of said software module is triggered from a page displayed in the browser.

4. Method according to Claim 3, wherein the code of the page displayed in the browser contains a tag identifying said application and that can be interpreted by said software module.

5. Method according to Claim 1, wherein each detected window is rendered hierarchically depending on the software module by execution of a window management function of the operating system, making the detected window a child of the extension module.

6. Method according to Claim 1, further comprising steps consisting in:
- detecting (E26) at least one window generated by the application which relates to events produced by the application that do not relate to said rendering, and
- for each window detected, hiding (E26) the display of the window and determining in addition whether an action of a user on an input/output device that outfits the user terminal is expected, and if this is the case, simulating the expected action of the user.

7. Method according to Claim 1, further comprising steps consisting in:
- detecting (E29), during the execution of the application, actions that are implemented by the user via an input/output device and whose purpose is to modify the display mode of the rendering produced by the application; and
- implementing (E29) the required display mode modification.

8. Method according to Claim 1, further comprising a step consisting in capturing a graphical view displayed in the window of the browser in response to an action of the user on an element displayed in the window of the browser.

9. Method according to any one of the preceding claims, wherein the software module implements preliminary steps consisting in:
- downloading, from the network into the user computer information system, an installation program for the application;
- executing the installation program for installing the application in the user computer information system.

10. Method according to Claim 2, wherein the extension module is obtained in advance by downloading via a network to which the terminal is connected, via a web page displayed by the browser.

11. Method according to Claim 2, wherein the extension module is a *plug-in-*type program.

12. Software module for web browser, **characterized in that** it comprises program instructions for implementing a method according to any one of Claims 1 to 11, when said software module is executed by a web browser that is hosted on a computer information system.

13. User computer terminal equipped with a web browser wherein is executed a software module suitable for
- triggering an execution (E24, E25), by the operating system of the terminal, of an application designed to be executed autonomously by a computer operating system, and to implement, during the execution of the application, steps consisting in:
- detecting (E28) at least one window generated by the application and which relates to rendering generated by the application;
- for each window detected in the preceding step, rendering the detected window so that it is hierarchically dependent on the software module, so as to redirect (E28) the rendering produced by the application to a window displayed by the browser.
